**Europäisches Patentamt**

**European Patent Office**

**Office européen des brevets**

(11) Veröffentlichungsnummer: **0 126 308**
A1

# EUROPÄISCHE PATENTANMELDUNG

(21) Anmeldenummer: 84104486.0

(22) Anmeldetag: 19.04.84

(51) Int. Cl.³: **B 29 C 27/30**, B 29 D 23/10

(30) Priorität: 18.05.83 DE 3318082

(43) Veröffentlichungstag der Anmeldung: 28.11.84
Patentblatt 84/48

(84) Benannte Vertragsstaaten: AT BE CH DE FR GB IT LI LU NL SE

(71) Anmelder: DYNAMIT NOBEL AKTIENGESELLSCHAFT, Postfach 1209, D-5210 Troisdorf, Bez. Köln (DE)

(72) Erfinder: Lorry, Cosmas, Agathastrasse 17, D-5216 Niederkassel 1 (DE)
Erfinder: Feige, Siegfried, Mühlenhofweg 35, D-5200 Siegburg 1 (DE)

(54) Verfahren und Vorrichtung zum Herstellen eines mit einer Isolierhülle aus Schaumstoff versehenen Rohres.

(57) Verfahren und Vorrichtung zum kontinuierlichen Herstellen eines mit einer Isolierhülle aus thermoplastischem Schaumkunststoff versehenen Rohres (4) bzw. Rohrbündels, wobei ein Streifen (1) aus Schaumkunststoff auf seiner die spätere Isolierhülleninnenseite bildenden Seite kurzzeitig bis in den thermoelastischen bzw. thermoplastischen Zustand erwärmt und dann quer zu seiner Längserstreckung um ein fortlaufend eingeführtes Rohr (4) verformt, die Stoßnaht verschlossen und beim Durchziehen durch ein Formrohr (8) zur Isolierhülle geformt und dann abgekühlt wird und wobei der Streifen (1) bzw. die Isolierhülle mittels eines Transportbandes (9) fortbewegt wird, wobei zwischen Innenseite des Formrohres (8) und Isolierhülle bzw. Transportband (9) Luft zur Bildung eines Luftpolsters eingeführt wird.

0126308

Troisdorf, den 3. Mai 1983
OZ 83024    MG/Bd

DYNAMIT NOBEL AKTIENGESELLSCHAFT
Troisdorf Bez. Köln

Verfahren und Vorrichtung zum Herstellen eines mit einer Isolierhülle aus Schaumstoff versehenen Rohres

Der Gegenstand der Erfindung bezieht sich auf ein Verfahren zum kontinuierlichen Herstellen eines mit einer Isolierhülle aus thermoplastischem Schaumkunststoff versehenen Rohres bzw. Rohrbündels, wobei ein Streifen aus Schaumkunststoff auf seiner die spätere Isolierhülleninnenseite bildenden Seite kurzzeitig bis in den thermoelastischen bzw. thermoplastischen Zustand erwärmt und dann quer zu seiner Längserstreckung um ein fortlaufend eingeführtes Rohr verformt, die Stoßnaht verschlossen und beim Durchziehen durch eine Formröhre zur Isolierhülle geformt und dann abgekühlt wird und wobei der Streifen bzw. die Isolierhülle mittels eines Transportbandes fortbewegt wird. Eine Vorrichtung zum Durchführen des Verfahrens geht aus von einem umlaufenden Band zum Transport der zu bildenden Isolierhülle, einer Formröhre, einer Einrichtung zum Verschließen der Stoßnaht und Heizeinrichtungen für Schaumstoffstreifen und Rohr.

Solche Verfahren und Vorrichtungen sind beispielsweise aus der deutschen Patentschrift 25 32 406 und der deutschen Patentschrift 26 54 879 bekannt. Bei dem Verfahren nach

0126308

der DE-PS 26 54 879 wird der Schaumstoffstreifen zuerst zu der rohrförmigen Isolierhülle verformt und anschließend werden die Rohre eingeführt, die Isolierhülle verschlossen und das isolierte Rohr nach Abkühlung abgezogen.

Der Erfindung liegt die Aufgabe zugrunde, das bekannte Verfahren weiter zu vereinfachen und insbesondere den Schritt der Einführung des Rohres in die Isolierhülle mit der beginnenden Verformung des Schaumstoffstreifens zur Isolierhülle zusammen zu legen, so daß nicht nur biegsame Rohre, sondern auch starre Rohre nach diesem Verfahren isoliert werden können. Bei den hohen gewünschten Arbeitsgeschwindigkeiten treten erhebliche Reibungen im Bereich der Formgebung der Isolierhülle auf, die sich dann nachteilig bemerkbar machen, wenn das Rohr zugleich mit der Isolierhülle durch die Formgebungseinrichtung geführt wird. Erfindungsgemäß wird zur Lösung der Aufgabe und Verbesserung des Verfahrens vorgeschlagen, daß zwischen der Innenseite des Formrohres und der Isolierhülle bzw. dem Transportband Luft zur Bildung eines Luftpolsters eingeführt wird. Durch die eingeführte Luft und das dadurch entstehende Luftpolster wird die Reibung zwischen den Wandungen des Formrohres und dem hindurchgezogenen Transportband mit Isolierhülle reduziert und gleichzeitig wird noch ein zusätzlicher Abkühlungseffekt bewirkt. Das erfindungsgemäße Verfahren ermöglicht die Herstellung isolierter Rohre mit Isolierhüllen aus Schaumstoffstreifen mit sehr hohen Arbeitsgeschwindigkeiten und damit wirtschaftlich bei sehr geringem maschinellen Aufwand. Das isolierende Rohr kann aus Kunststoff, Kupfer, Aluminium Stahl o.dgl. bestehen, es kann starr oder auch elastisch sein. Als thermoplastischer Schaumkunststoff kommen beispielsweise Polyolefinschaumstoffe, insbesondere auch vernetzte Polyolefinschaumstoffe in Frage.

0126308

In manchen Fällen ist es wünschenswert, Isolierhülle und Rohr vollflächig zu verbinden. Dies kann bei dem erfindungsgemäßen Verfahren in einfacher Weise dadurch erfolgen, daß das Rohr auf seiner Außenseite erwärmt wird, so daß eine Kaschierung des Schaumstoffstreifens auf der Rohroberfläche erfolgt. Beim nachfolgenden Durchlaufen der Formgebungseinrichtung wird der noch notwendige Druck ausgeübt, so daß vollflächig der haftfeste Verbund entsteht. Eine solche Kaschierung hat den Vorteil, daß sich zwischen Isolierhülle und Rohr insbesondere bei Temperaturwechselbeanspruchungen kein Schwitzwasser bilden kann. Auch bei Lagerung, Transport und Montage kann kein Wasser zwischen Isolierhülle und Rohr gelangen, so daß damit auch einer Feuchtigkeitskorrosion bei metallischen Rohren entgegengewirkt wird. Da insbesondere vernetzte Polyolefinschaumstoffe durch Erwärmung an der Oberfläche sehr leicht klebrig werden, ist es nur erforderlich, die hierfür notwendige Schweißtemperatur durch Erwärmung des Rohres zu erreichen, so daß in einfacher Weise die Kaschierung erzielt wird.

Für die Durchführung des erfindungsgemäßen Verfahrens wird ausgehend von den bekannten Vorrichtungen das Formrohr für die Isolierhülle auf seiner Innenseite mit Kanälen versehen, durch die ein Luftstrom zwischen Isolierhülle bzw. Transportband und Formrohrinnenseite eingebracht wird. Die Kanäle sind bevorzugt über die gesamte Länge und den Umfang des Formrohres auf der Innenseite verteilt angeordnet, so daß ein gleichmäßiges ausreichendes Luftpolster durch die einströmende Luft gebildet wird, das die Reibung der Isolierhülle und des Transportbandes an der Formrohrinnenwand verringert, damit wird ein Beschädigen der Isolierhülle vermieden. Eine vorteilhafte Weiterbildung der erfindungsgemäßen Vorrichtung sieht vor, daß das Formrohr mehrteilig ausgebildet ist, um eine einfache Montage und Demontage und Justierung zu ermöglichen und

0126308

daß das Formrohr mit Hohlkammern ausgebildet ist, wobei die Hohlkammern mit Eintrittsöffnungen für die Luft versehen sind und die Innenseite der Formrohre bildenden Wände die Kanäle als Austrittsöffnungen aufweisen. An die Eintrittsöffnungen der Hohlkammern kann eine Druckluft erzeugende Einrichtung angeschlossen werden, die für den notwendigen Luftstrom zur Ausbildung des Luftpolsters wirkt.

Die Erfindung wird in der Zeichnung an einem Ausführungsbeispiel erläutert.
Es zeigen

Figur 1          eine schematische Darstellung einer Vorrichtung zum Herstellen der mit einer Isolierhülle zu versehenden Rohre,

Figur 2          eine schematische Seitenansicht mit Ausschnitt des Formrohres nach Fig. 1,

Figur 3          den Querschnitt AA nach Fig. 2,

Figur 4          den Querschnitt BB nach Fig. 2,

Figur 5          den Querschnitt CC nach Fig. 2,

Figur 6 u. 7  einen Querschnitt und eine Aufsicht für den Einlaufbereich des Formrohres mit Schweißgerät nach Fig. 1,

Figur 8          den Einblick in einen Formtrichter,

Figur 9          einen auszugsweisen Querschnitt durch die Wand des Formrohres,

Fig. 10 + 11 zwei Querschnitte eines Fertigproduktes,

Figur 12          den Einlaufbereich im Querschnitt der Formrohre mit Heizeinrichtung für das Rohr.

0126308

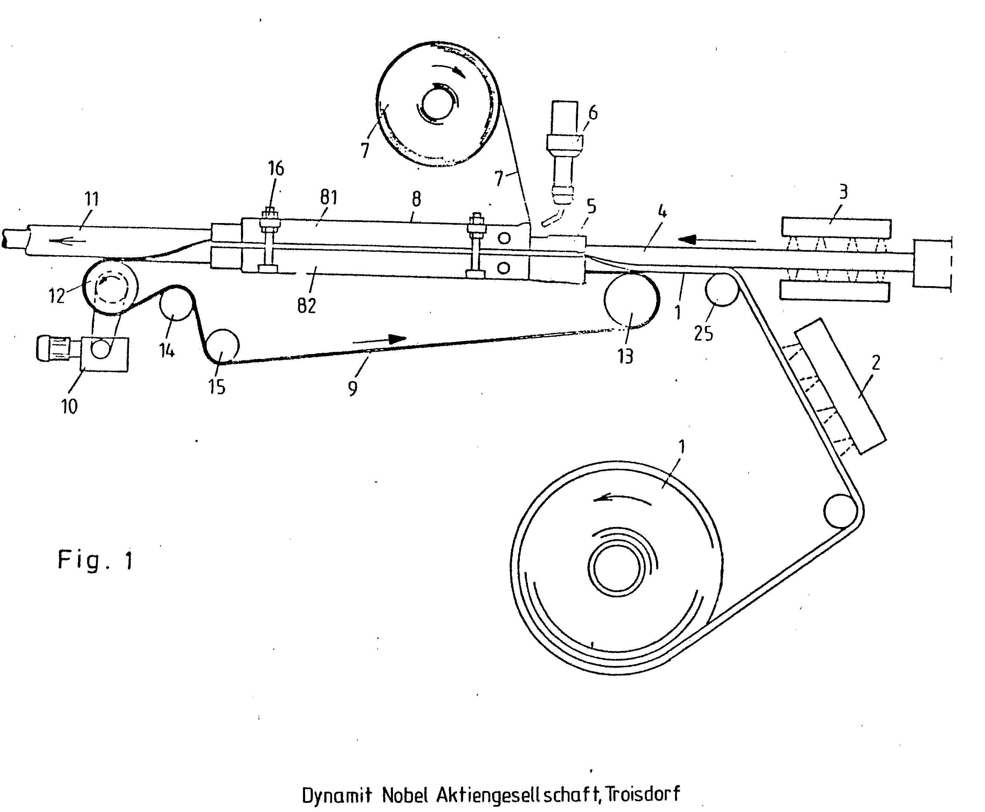

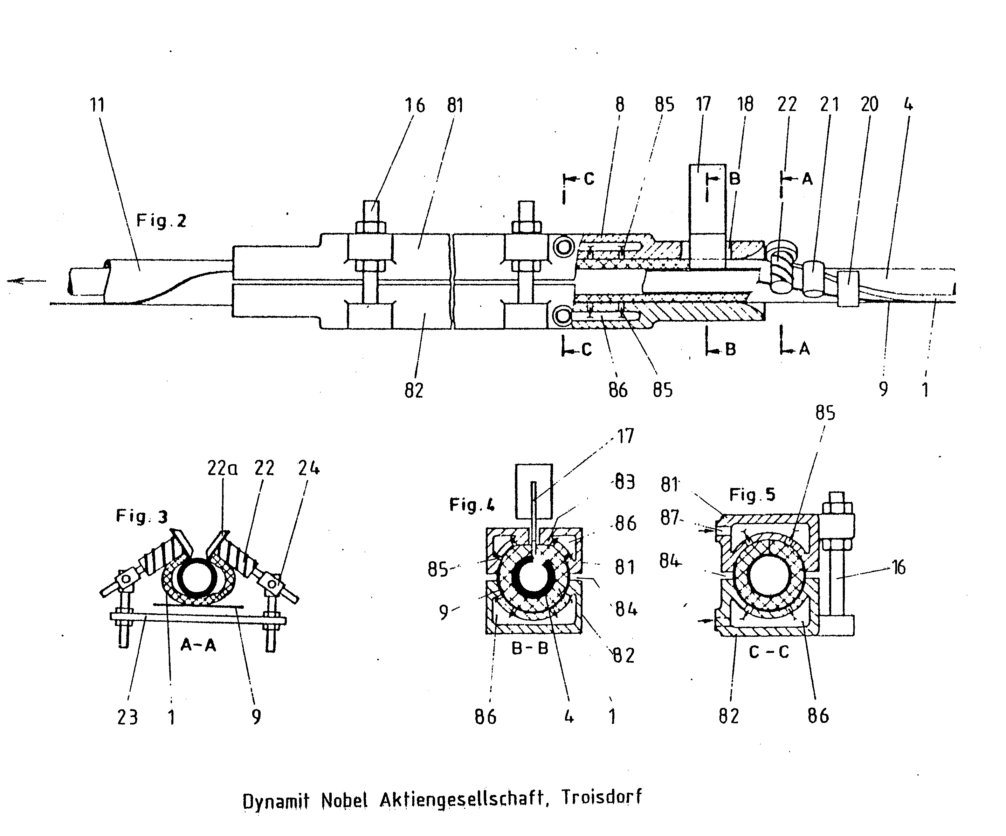

Mit der in Figur 1 dargestellten Vorrichtung können Schaumstoffstreifen 1 aus einem thermoplastischen und verformbaren Material, von Vorratsrollen direkt zur Ummantelung von Rohren 4, beispielsweise Warmwasserrohren, Heizungsrohre für Fußbodenheizungen usw. als Isolierhülle verarbeitet werden. Der Schaumstoffstreifen 1 wird von der Vorratsrolle über Umlenkrollen abgezogen und an einer Heizeinrichtung 2, beispielsweise Infrarotstrahlern vorbeigeführt und im Bereich der Umlenkrolle 25 mit dem Rohr 4 in Kontakt gebracht. Das Rohr 4 wird kontinuierlich in Pfeilrichtung zugeführt und ggf. beim Durchlaufen der Heizeinrichtung 3 vor dem Zusammenführen mit dem Schaumstoffstreifen 1 vorgewärmt. Den gleichmäßigen Transport von Rohr 4 und Schaumstoffstreifen 1 übernimmt dann das endlos umlaufende Transportband 9, das eine Mitnehmerfunktion aufweist und bevorzugt eine rauhe Oberfläche hat, die eine gute Haftung zum Schaumstoffstreifen der durch die Erwärmung weichgeworden ist, aufweist. Das Transportband läuft über Rollen 12, 13, 14, 15 um, wobei die Rolle 12 über den Antrieb 10 angetrieben und damit die Geschwindigkeit regelbar ist. Die Formung der Isolierhülle erfolgt vor dem Einlaufen in das Formrohr 8, das in dem gezeigten Beispiel zweiteilig mit Oberteil 81 und Unterteil 82 ausgebildet ist, die mittels der Schrauben 16 zusammengehalten sind. Die Ausbildung des Formrohres beispielsweise mit der horizontalen Trennfuge 84 hat den Vorteil, daß sowohl das Transportband leicht ausgewechselt werden kann, als auch durch eine Verstellung des Oberteiles unterschiedliche Dicken der Isolierhülle und auch Toleranzen ausgeglichen werden können. Oberteil und Unterteil können auch mittels parallel verstellbarer Einrichtungen, z.B. Säulenführungen verstellt werden. Im Einlaufbereich des Formrohres 8 findet eine Vorformung statt, die beispielsweise mittels eine Trichters 5 oder aber mittels Rollen wie in der Figur 2 und 3 zu sehen, vorgenommen werden kann. Auch der Trichter, der in einem

0126308

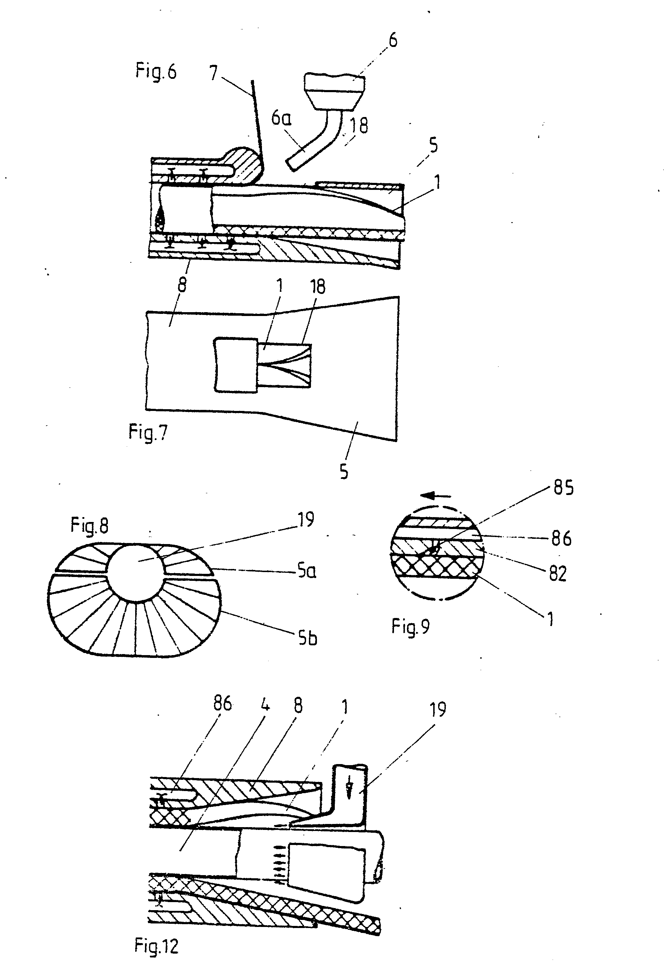

Stück direkt an die an das Formrohr 8 anschließen kann, ist in einer möglichen Ausführung beispielsweise in der Fig. 8 in der Vorderansicht dargestellt, wobei der Trichter 5 ebenfalls horizontal geteilt in Oberteil 5a und Unterteil 5b ist und der am Ende in den Querschnitt 19 der Formrohre des Formrohres übergeht. Im Bereich der Beendigung der Vorformung werden die Ränder des zur Isolierhülle geschlossenen Schaumstoffstreifens miteinander fest verbunden, insbesondere verschweißt, hierzu ist beispielsweise das Schweißgerät 6, ein Warmluftschweißgerät mit Düse vorgesehen. Gleichzeitig kann auf die Schweißnaht noch ein Signierband 7 aufgeschweißt werden, das Band dient dann gleichzeitig der Nahtverstärkung. Es ist auch möglich, in diesem Bereich einen Gleitverschluß aufzuschweißen und damit die Isolierhülle entlang der Ränder zu schließen. Nach dem Verlassen des Formrohres wird das fertige Produkt abgezogen, ggf. aufgewickelt oder abgelängt. In den Figuren 10 und 11 sind beispielsweise mit der Vorrichtung herstellbare Produkte dargestellt. Es ist auch möglich, nur Isolierhüllen ohne Rohr mit der Vorrichtung herzustellen, wie Fig. 11 zeigt.

Die Fig. 2 zeigt das Formrohr nach Fig. 1 in etwas genauerer Darstellung. Des weiteren ist gegenüber Fig. 1 der Vorformbereich geändert, hier sind Anpreßrollen 21, 22 und ein Anschlag 20 vorgesehen. Anstelle des Schweißgerätes 6 ist am Ende des Vorformbereiches der Schweißteil 17 vorgesehen, um die Nahtverbindung herzustellen. Die Vorformung des Schaumstoffstreifens 1 erfolgt über beidseitig angeordnete Anschläge 20 und Rollen 21 und im Endbereich mit dem Rollenpaar 22, wie in Fig. 3 dargestellt, die vorteilhaft spiralförmige Stege aufweisen, wodurch eine gute Zuführung der Schweißkanten zum Rollenanschlag 22a gewährleistet ist und eine genaue Führung. Die Rollen 22 können vorteilhaft an der Halterung 23, 24 verstellbar befestigt sein.

Das Verbinden der Ränder des Schaumstoffstreifens, die zur Isolierhülle geformt sind, erfolgt beispielsweise mittels des Schweißteiles 17, der durch die Öffnung 18 des Formrohres hindurchgeführt ist, wie aus Figur 2 und Fig. 4 zu ersehen ist.

In der Fig. 6 ist im Querschnitt auszugsweise die Anordnung des Schweißgerätes 6 mit Düse 6a dargestellt, wobei diese durch die Ausnehmung 18 des Formtrichters 5 die Warmluft zum Verschweißen der Isolierhülle zuführen. Das Signierband 7 wird beispielsweise über eine abgerundete Kante des Formrohres zugeführt und auf die Oberseite der Isolierhülle gepreßt.

Nach der Vorformung und Verschweißung wird das mit dem Schaumstoffstreifen als Isolierhülle ummantelte Rohr zur Zugentlastung des Schaumstoffstreifens mit dem Transportband 9 durch das Formrohr 8 gezogen.

Es ist auch möglich im Bereich des Einlaufens des Rohres 4 in die Formröhre 8 bzw. den Formtrichter 5 z.B. mittels einer Ringdüse 19, wie in Fig. 12 im Querschnitt auszugsweise dargestellt, auf eine solche Temperatur zu erwärmen, daß an der Kontaktstelle zwischen Schaumstoffstreifen und Rohr die Schweißtemperatur für den Schaumstoff erreicht wird und eine Kaschierung zwischen Isolierhülle und Rohr erreicht wird. Diese Kaschierung hat den Vorteil, daß sich zwischen Isolierhülle und Rohr, insbesondere bei Temperaturwechsel kein Schwitzwasser bilden kann und auch bei Lagerung, Transport und Montage kein Wasser z.B. zwischen die beiden Materialien gelangen kann.

0126308

Um das Luftpolster in dem Formrohr 8 zu schaffen, das zur Verminderung der Reibung beim Durchzug der Isolierhüllen mit Transportband durch das Formrohr dienen soll und das gleichzeitig noch die Abkühlung der Isolierhülle, insbesondere der Schweißnaht fördert, ist das Formrohr 8 bzw. das Oberteil 81 und das Unterteil 82 mit Hohlkammern 86 versehen, die mit Eintrittsöffnungen für Luft und mit Austrittsöffnungen, das sind die Bohrungen bzw. Kanäle 85, die durch die Innenwand des Formrohres, gehen, versehen. Diese Einrichtung für die Luftzufuhr in das Innere des Formrohres ist beispielsweise in den Figuren 2, 4, 5, 6, 9 und 12 auszugsweise dargestellt. Nach Fig. 5 weist sowohl das Oberteil 81 als auch das Unterteil 82 des Formrohres je eine in Längserstreckung des Formrohres durchgehende Luftkammer 86 auf, die jeweils eine Eintrittsöffnung 87 für Luftzufuhr, beispielsweise mittels eines angeschlossenen Luftdruckgerätes aufweist. Über die in der Innenwandung des Formrohres über das gesamte Formrohr verteilt angeordneten Kanäle 85 kann die Luft, wie mit den Pfeilen dargestellt, zwischen die Innenseite des Formrohres und die Isolierhülle bzw. das Transportband 9 gelangen und hier durch die Schaffung des Luftpolsters die Reibung verringern. Die Kanäle bzw. Bohrungen 85 können, wie auszugsweise in Fig. 9 dargestellt, in Transportrichtung schräg ausgeführt sein, um den Vorschub zu begünstigen.

Nach dem erfindungsgemäßen Verfahren und mit dieser Vorrichtung können auch nur einschichtige Isolierhüllen, bei entsprechender Ausstattung auch mehrschichtige Isolierhüllen mit und ohne Rohr gefertigt werden.

Troisdorf, den 3. Mai 1983 0126308
OZ 83024   MG/Bd

Patentansprüche

1. Verfahren zum kontinuierlichen Herstellen eines mit einer Isolierhülle aus thermoplastischem Schaumkunststoff versehenen Rohres bzw. Rohrbündels, wobei ein Streifen aus Schaumkunststoff auf seiner die spätere Isolierhülleninnenseite bildenden Seite kurzzeitig bis in den thermoelastischen bzw. thermoplastischen Zustand erwärmt und dann quer zu seiner Längserstreckung um ein fortlaufend eingeführtes Rohr verformt, die Stoßnaht verschlossen und beim Durchziehen durch ein Formrohr zur Isolierhülle geformt und dann abgekühlt wird und wobei der Streifen bzw. die Isolierhülle mittels eines Transportbandes fortbewegt wird, d a d u r c h g e k e n n z e i c h n e t , daß zwischen Innenseite des Formrohres und Isolierhülle bzw. Transportband Luft zur Bildung eines Luftpolsters eingeführt wird.

2. Verfahren nach Anspruch 1, dadurch gekennzeichnet, daß das Rohr auf seiner Außenseite erwärmt wird, so daß eine Kaschierung zwischen Schaumstoffstreifen und Rohr erfolgt.

3. Vorrichtung zum Durchführen des Verfahrens nach Anspruch 1 oder 2, mit einem umlaufenden Band zum Transport der zu bildenden Isolierhülle, einer Formröhre, einer Einrichtung zum Verschließen der Stoßnaht und Heizeinrichtungen für Schaumstoffstreifen und Rohr, dadurch gekennzeichnet, daß das Formrohr auf seiner Innenseite mit Kanälen versehen ist, durch die ein Luftstrom zwischen Isolierhülle bzw. Transportband und Formrohrinnenseite eingebracht wird.

0126308

4. Verfahren nach Anspruch 3, dadurch gekennzeichnet, daß das Formrohr mehrteilig und mit Hohlkammern ausgebildet ist, wobei die Hohlkammern mit einer Eintrittsöffnung für die Luft versehen sind und die Innenseite der Formrohre bildenden Wände die Kanäle als Austrittsöffnungen aufweisen.

0126308

Fig. 1

Dynamit Nobel Aktiengesellschaft, Troisdorf

Fig. 2

11

82

16
81

C

8

85

86
85

17

C

B

18

B

A

22

A

21

20

9

4

1

Fig. 3

23

1

A–A

9

22a

22

24

Fig. 4

85

9

86

B–B

4

1

82

84

81

86

83

17

Fig. 5

81

87

84

82

C–C

86

85

16

Dynamit Nobel Aktiengesellschaft, Troisdorf

Fig.6

Fig.7

Fig.8

Fig.9

Fig.12

| | EINSCHLÄGIGE DOKUMENTE | | EP 84104486.0 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| Y | US - A - 3 388 017 (GRIMSLEY) <br> * Gesamt * | 1,3,4 | B 29 C 27/30 <br> B 29 D 23/10 |
| Y,D | DE - C2 - 2 654 879 (DYNAMIT NOBEL) <br> * Gesamt * | 1,3,4 | |
| A,D | DE - C3 - 2 532 406 (DYNAMIT NOBEL) <br> * Gesamt * | 1 | |
| A | US - A - 4 115 498 (KISSELL) <br> * Gesamt * | | |
| A | DE - A - 1 915 768 (FURUKAWA) <br> * Gesamt * | | |

**RECHERCHIERTE SACHGEBIETE (Int. Cl. ³)**

B 29 C

B 29 D

Der vorliegende Recherchenbericht wurde für alle Patentansprüche erstellt.

| Recherchenort | Abschlußdatum der Recherche | Prüfer |
|---|---|---|
| WIEN | 31-07-1984 | MAYER |

EPA Form 1503. 03.82

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

0126308

Fig.10

Fig. 11